(19) Europäisches Patentamt
European Patent Office
Office européen des brevets

(11) **EP 2 787 416 A1**

(12) **EUROPEAN PATENT APPLICATION**

(43) Date of publication:
08.10.2014 Bulletin 2014/41

(51) Int Cl.:
*G06F 3/01* (2006.01)  *G06F 3/00* (2006.01)
*G06F 3/03* (2006.01)  *G06F 3/0488* (2013.01)

(21) Application number: 14161972.6

(22) Date of filing: 27.03.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 02.04.2013 JP 2013077202

(71) Applicant: FUJITSU LIMITED
Kawasaki-shi,
Kanagawa 211-8588 (JP)

(72) Inventors:
• **Matsuda, Takahiro**
**Kanagawa, 211-8588 (JP)**
• **Murase, Taichi**
**Kanagawa, 211-8588 (JP)**

(74) Representative: **HOFFMANN EITLE**
**Patent- und Rechtsanwälte**
**Arabellastrasse 4**
**81925 München (DE)**

(54) **Information operation display system, display program, and display method**

(57)    An information operation display system includes a camera, a projector, and an information processing apparatus. The information processing apparatus includes an acquisition unit configured to acquire an image taken by the camera, a measurement unit configured to measure a 3-dimensional coordinate position of an operation object included in the image acquired by the acquisition unit, and a display unit configured to control the projector such that an image indicating a point on which a selection operation is performed by the operation object is displayed on an operation target object according to the 3-dimensional coordinate position of the operation object measured by the measurement unit.

FIG. 2

**Description**

FIELD

The embodiments discussed herein are related to an information operation display system, a display program, and a display method.

BACKGROUND

In recent years, augmented reality technology has been known to project a virtual image onto a real object using a projector to present a note, a menu, or the like related to the real object. In such an augmented reality technology, a user interface technique is used to detect a gesture of an operation object such as a hand or a finger and realize an interaction between the operation object and an operation target object such as a virtual image. For example, a command to select a point on the operation target object is issued by making a gesture such as touching a part of the operation target object such as a virtual image with a fingertip.

A description of a related technique may be found, for example, in P. Mistry, P. Maes, "Sixth Sense-A Wearable Gestural Interface", in the Proceedings of SIGGRAPH Asia 2009, Emerging Technologies, Yokohama, Japan, 2009.

In the conventional technique described above, however, it is difficult for a user to recognize a situation of an operation performed by the user, which may cause an apparatus to incorrectly recognize an input or output given by a user. For example, when an operation using a hand or a finger is performed, the operation is, in most cases, to issue a command to specify a precise position. In such an operation, even a sight difference occurs between an actually intended position and a position recognized by the apparatus, a user may repeat the operation many times until the intended position is correctly recognized by the apparatus, which results in a reduction in operability.

SUMMARY

Accordingly, it is an object in one aspect of the invention to provide an information operation display system, a display program, and a display method, which allows it to improve the operability.

According to an aspect of the invention, an information operation display system includes a camera, a projector, and an information processing apparatus. The information processing apparatus includes an acquisition unit configured to acquire an image taken by the camera, a measurement unit configured to measure a 3-dimensional coordinate position of an operation object included in the image acquired by the acquisition unit, and a display unit configured to control the projector such that an image indicating a point on which a selection operation is performed by the operation object is displayed on an operation target object according to the 3-dimensional coordinate position of the operation object measured by the measurement unit.

BRIEF DESCRIPTION OF DRAWINGS

FIG. 1 is a diagram illustrating an example of an overall configuration of an information operation display system;
FIG. 2 is a diagram illustrating an example of an overall configuration of an information processing apparatus according to a first embodiment;
FIG. 3 is a diagram illustrating an example of data representing a 3-dimensional structure of a work plane;
FIG. 4A is a diagram illustrating an example of data representing coordinates of fingers;
FIG. 4B is a diagram illustrating an example of data representing coordinates of fingers;
FIG. 5 is a diagram illustrating an example of data representing depths of fingers;
FIG. 6A is a diagram illustrating a display process associated with a selection position;
FIG. 6B is a diagram illustrating a display process associated with a selection position;
FIG. 7 is a diagram illustrating a situation in which there is a difference between a touch position intended by a user and a touch position detected by an apparatus;
FIG. 8 is a diagram illustrating a situation in which a selection position is hidden by a fingertip;
FIG. 9 is a diagram illustrating a situation in which an alert line is displayed when a finger is moved in a Y direction;
FIG. 10 is a flow chart illustrating a procedure of a selection position display process performed by an information processing apparatus according to the first embodiment;
FIG. 11 is a diagram illustrating an example of an overall configuration of an information processing apparatus according to a second embodiment;

FIG. 12 is a diagram illustrating a display process to present an instruction to keep a finger at rest;

FIG. 13 is a diagram illustrating a manner in which information indicating a completion of a copying process is displayed in a superimposed fashion and an animation of moving an image is displayed;

FIG. 14 is a flow chart illustrating a procedure of a process of issuing an instruction to keep a fingertip at rest and a copy selection process performed by an information processing apparatus according to the second embodiment; and

FIG. 15 is a diagram illustrating a computer that executes a display program.

DESCRIPTION OF EMBODIMENTS

Referring to figures, embodiments of an information operation display system, a display program, and a display method are described below. Note that the embodiments described below are merely illustrative examples and not for limitation. Also note that the embodiments may be combined in various manners as long as no contradiction is derived.

First Embodiment

[Configuration of information operation display system]

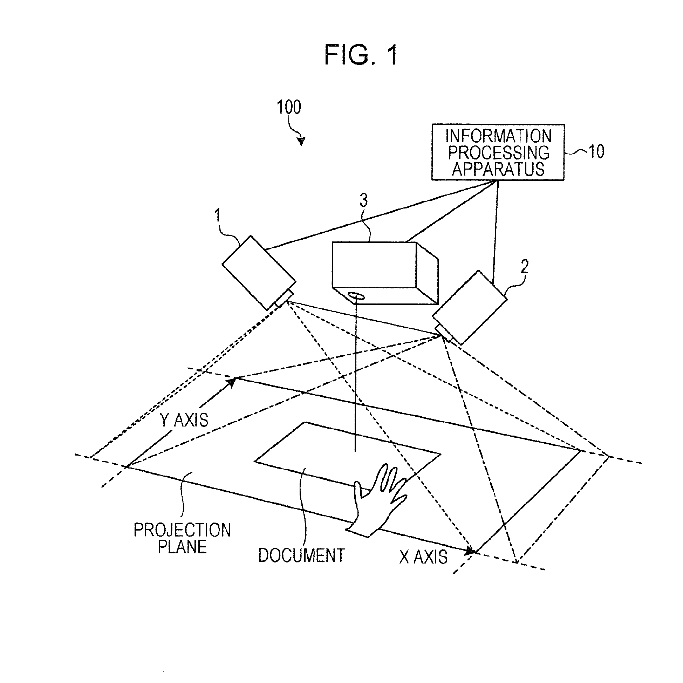

FIG. 1 is a diagram illustrating an example of a general configuration of an information operation display system. As illustrated in FIG. 1, the information operation display system 100 includes cameras 1 and 2, a projector (display apparatus) 3, and an information processing apparatus 10. The information processing apparatus 10 is connected to the cameras 1 and 2 and the projector 3. Further, the information processing apparatus 10 is preferably connected to a network (not illustrated) to communicate with other equipment. The projector 3 projects a virtual image on a certain projection plane. The cameras 1 and 2 take images of the image projected on the projection plane and an operation object, such as a hand or a finger of an operator, placed on the projected image.

The information operation display system 100 has a projection plane onto which an image is projected by the projector 3. The projection plane is used as a work plane, and a virtual image is provided in a work environment by projecting the virtual image onto the projection plane. The projector 3 and the two cameras 1 and 2 are installed above the projection plane so as to face downward in vertical directions. The two cameras 1 and 2 have known parameters, and they are installed such that their optical axes are parallel to each other and their horizontal axes are on the same straight line in the image. The parameters corresponding to each other of the cameras 1 and 2 are preferably equal or same as possible. Using these cameras 1 and 2, color information and depths of the projection plane or the work plane are acquired. A virtual image is projected on the work plane by the projector 3. A user performs an interaction by placing his/her hand on the work plane from a particular direction.

The information processing apparatus 10 calculates the 3-dimensional position of the operation object from a time series of images taken by the cameras 1 and 2. The information processing apparatus 10 then determines an operation performed on an operation target object such as a document based on the calculated 3-dimensional position of the operation object. More specifically, for example, the information processing apparatus 10 determines which information part in the document is touched (selected) or released from the touched (selected) state. A network for connecting the cameras 1 and 2 and the projector 3 may be a wired or wireless communication network such as a local area network (LAN), a virtual private network (VPN), or the like.

Note that the shutter operation timing may not be synchronous between the cameras 1 and 2. That is, the cameras 1 and 2 may not be synchronous in operation. Furthermore, the information operation display system 100 may include three or more cameras. Although in the present embodiment it is assumed by way of example that the projector 3 is connected to the information processing apparatus 10 via the network, a cable, or a radio, the information processing apparatus 10 may not be connected to the network. Furthermore, in the following description, it is assumed by way of example but not limitation that an object whose image is taken by the cameras 1 and 2 is a hand or a finger of an operator who operates the projected document. Alternatively, the object may be a pen, a stick, or the like.

In the information operation display system 100, a calibration is performed in advance in terms of the relative position between the recognition coordinate system of the cameras 1 and 2 and the display coordinate system of the projector 3. In the information operation display system 100, whenever a change occurs in the relative positional relationship among the cameras 1 and 2 and the projector 3, a calibration is performed. A specific method of the calibration is to read out an image output from the projector 3 using the cameras 1 and 2 and internally perform the calibration as described below. Note that the method of the calibration is not limited to this. In the information operation display system 100, the calibration is performed for each of the two cameras.

In the information operation display system 100, first, a marker is displayed at a position with certain arbitrary coordinate values $(x\_p, y\_p)$ in the display coordinate system of the projector 3. The marker may have an arbitrary color and a shape that allow the marker to be easily distinguished from a background. The cameras 1 and 2 each take an image of a situation projected on the projection plane. Thereafter, the information processing apparatus 10 reads the marker by performing image processing. In a case where the marker has a circular pattern, the circular pattern may be read out by performing a Hough transform disclosed, for example, in Kimme et al., "Finding circles by an array of accumulators", Communications of the Association for Computing Machinery", #18, pp. 120-122, 1975. Coordinate values obtained via the reading process are denoted as $(x\_i, y\_i)$.

The information processing apparatus 10 performs the process of reading the marker for four points at arbitrary positions. The information processing apparatus 10 determines each component of a homography matrix H with 3 rows and 3 columns by solving a set of 8 simultaneous linear equations given by four sets of coordinate values $(x\_i, y\_i)$ corresponding to $(x\_p, y\_p)$ obtained via the marker read process described above. The homography matrix H is a matrix indicating a projective transform from a plane in a 3-dimensional space to another plane. More specifically, in the present embodiment, a correspondence between the camera coordinate plane and the projector coordinate plane is determined. The information processing apparatus 10 stores the homography matrix obtained in the above-described manner for use in projecting a virtual image.

[Configuration of information processing apparatus]

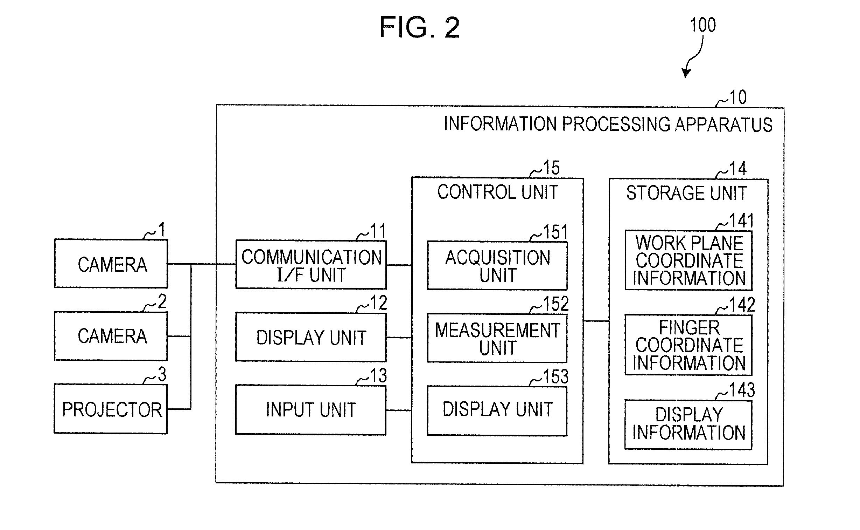

Next, referring to FIG. 2, the information processing apparatus 10 according to the first embodiment is described below. FIG. 2 is a diagram illustrating an overall configuration of the information processing apparatus 10 according to the first embodiment. As illustrated in FIG. 2, the information processing apparatus 10 includes a communication I/F (interface) unit 11, a display unit 12, an input unit 13, a storage unit 14, and a control unit 15.

The communication I/F unit 11 is an interface configured to control communication with another apparatus. The communication I/F unit 11 receives various kinds of information via the network. For example, the communication I/F unit 11 receives an image of a document and/or an operation object from the cameras 1 and 2. An example of the communication I/F unit 11 is a network interface card such as a LAN card.

The display unit 12 is a display device configured to display various kinds of information. Examples of display devices usable as the display unit 12 include a liquid crystal display (LCD), a cathode ray tube (CRT), and the like. The display unit 12 displays various kinds of information. For example, the display unit 12 displays various kinds of information stored in the storage unit 14.

The input unit 13 is an input device for use in inputting various kinds of information. Examples of input devices usable as the input unit 13 include a mouse, a keyboard, and a touch sensor. The input unit 13 outputs information input by a user of the information processing apparatus 10 to the control units 15. For example, when the input unit 13 receives information from which other pieces of information such as work plane coordinate information 141, finger coordinate information 142, display information 143, and the like are to be generated as will be described later, the input unit 13 outputs the received information to the control unit 15 such that the information is stored in the storage unit 14 via the control unit 15.

The storage unit 14 is a nonvolatile storage apparatus such as a hard disk, a solid state drive (SSD), optical disk, or the like. Alternatively, the storage unit 14 may be a data-rewritable semiconductor memory such as a random access memory (RAM), a flash memory, a non-volatile static random access memory (NVSRAM), or the like.

The storage unit 14 stores an operating system (OS) and various programs executed by the control unit 15. The storage unit 14 may also store various kinds of data used or generated by the programs. For example, the storage unit 14 stores the work plane coordinate information 141, the finger coordinate information 142, and the display information 143.

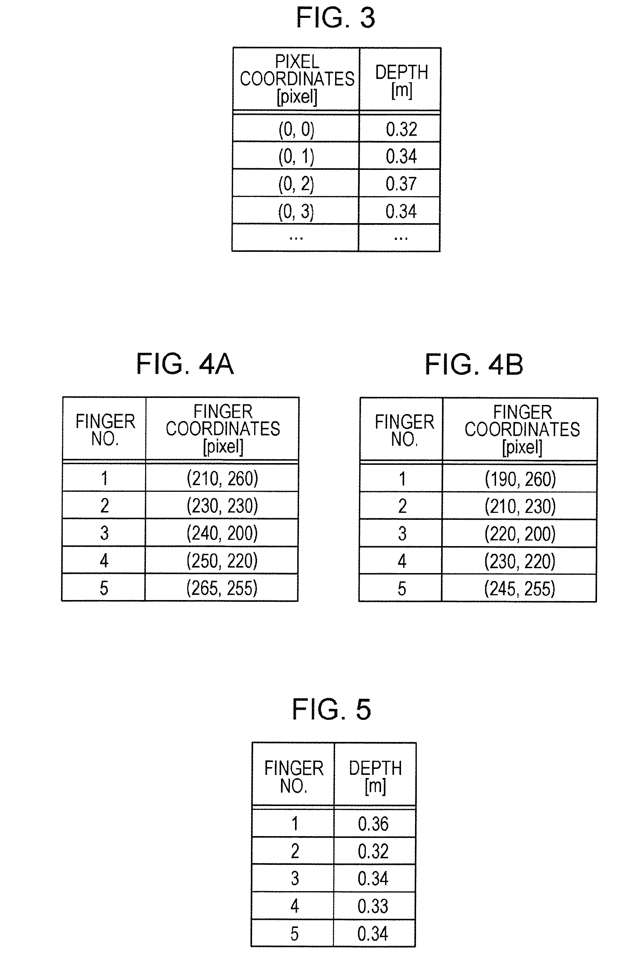

The work plane coordinate information 141 is information associated with a 3-dimensional shape of a work plane. More specifically, for example, the work plane coordinate information 141 is information including coordinates of each pixel with respect to an arbitrary reference point in 3-dimensional orthogonal coordinates in the work plane and a coordinate indicating a depth coupled thereto as illustrated by way of example in a table of FIG. 3.

The work plane coordinate information 141 may be acquired and stored in advance. For example, the information processing apparatus 10 may acquire in advance the 3-dimensional shape of the work plane using a method called an active stereoscopic method to acquire the work plane coordinate information 141. In the active stereoscopic method, a predetermined pattern is projected by the projector 3 onto an object, and the 3-dimensional shape of the object is acquired by measuring a change in the projected pattern between the cameras 1 and 2.

The active stereoscopic method has various versions. In the present embodiment, by way of example but not limitation, a space coding method disclosed, for example, in Japanese Laid-open Patent Publication No. 60-152903 is employed. Note that methods other than the space coding method may be used. In the space coding method, a luminance pattern with IDs of coordinates of all pixels of the projector 3 is produced, and the pattern is projected a plurality of times. From a result, a depth [m] of each pixel of the projector 3 is calculated by triangulation.

The finger coordinate information 142 is information associated with 3-dimensional coordinate positions, measured by the measurement unit 152, of fingers given as the operation objects. As illustrated by way of example in tables of FIGs. 4A and 4B, the finger coordinate information 142 is information indicating a correspondence between "finger No." identifying each of five fingers and "finger coordinates" of a finger identified by "finger No." In the example illustrated in FIGs. 4A and 4B, coordinates of a tip of each finger taken by each of the two cameras 1 and 2 are represented in units of pixels. Note that if pressing down is detected for at least one finger, it is allowed to perform the following process.

For example, fingertip coordinates of each fingertip are calculated from images taken by the two cameras 1 and 2 in a state in which one hand of a user is opened, and the resultant fingertip coordinates are stored together with fingertip IDs as the finger coordinate information 142. The fingertip IDs may be given, for example, by assigning serial numbers thereto in the order from a smallest value toward greater values in a horizontal coordinate. A reference point for coordinates of the fingertip pixels may be taken, for example, at an upper left corner of the image.

Furthermore, in the finger coordinate information 142, as illustrated by way of example in the table of FIG. 5, the "depth" is described for each fingertip of a user identified by "finger No." For example, in the table illustrated in FIG. 5, the same fingertip IDs as those in the tables in FIGs. 4A and 4B are given, and the depth corresponding to each fingertip ID is stored.

The display information 143 is information associated with an image which is displayed by the projector 3 to indicate a point on which a selection operation with a finger is performed. The display information 143 is referred to when the display unit 153 displays the image indicating the point on which the selection operation with the finger is performed.

The control unit 15 is a device that controls the information processing apparatus 10. As for the control unit 15, an electronic circuit such as a central processing unit (CPU), a micro processing unit (MPU), or the like or an integrated circuit such as an application specific integrated circuit (ASIC), a field programmable gate array (FPGA), or the like may be employed. The control unit 15 includes an internal memory for storing a program defining various processing procedures and associated control data thereby executing various processes. In the control unit 15, various programs operate such that the control unit 15 functions as various processing units. The control unit 15 includes an acquisition unit 151, a measurement unit 152, and a display unit 153.

The acquisition unit 151 acquires images taken by the cameras 1 and 2. For example, the acquisition unit 151 acquires images from the two cameras 1 and 2 a predetermined number of times (for example, 60 times) every second.

The acquisition unit 151 then performs a finger position detection on each of the acquired images. The finger position may be detected, for example, by estimating the finger position only using the image via image processing based on a method disclosed, for example, in Japanese Laid-open Patent Publication No. 2003-346162.

The information processing apparatus 10 may store in advance learning data associated with hand shapes, and may estimate the finger shape by calculating the similarity of the current image relative to the learning data. A specific example of the method of estimating the finger shape by calculating the similarity of the current image relative to the learning data may be found, for example, in Yamashita et at., "Hand shape recognition using 3-dimensional active appearance model", Symposium on image recognition and understanding, MIRU 2012, IS 3-70, 2012-08. In the following description, it is assumed that the finger position is estimated using the method of estimating the finger position only from the image via the image processing. In this method, a flesh color part is extracted from an input image thereby extracting hand areas. Thereafter, the number of hands is recognized, and fingertip coordinates are estimated from a contour of the hand area.

Next, the acquisition unit 151 determines whether there is a finger. More specifically, the acquisition unit 151 checks whether there is output data associated with a finger position detection. In a case where there is no output data, a virtual image of a previous frame is displayed at the same position and the process for the current frame is ended.

The measurement unit 152 measures a 3-dimensional coordinate position of an operation object included in the captured images acquired by the acquisition unit 151. For example, the measurement unit 152 calculates 3-dimensional coordinate positions of fingers as the operation objects. In the present example, the coordinates of the fingers are calculated using a stereoscopic camera as described below. The measurement unit 152 determines the depth Z in a depth direction in a 3-dimensional space based on the triangulation according to equation (1) described below in which b denotes the length (base-line length) of a segment between the two cameras, f denotes the focal length of the cameras, and (u, v) and (u', v') denote 2-dimensional coordinates of two corresponding points on right and left sides. An example of the method of calculating the depth Z in the depth direction in the 3-dimensional space is disclosed, for example, in "Digital Image Processing" Edited by CG-ARTS Society, pp. 259.

$$Z = \frac{bf}{u - u'} \qquad \cdot \cdot \cdot (1)$$

The measurement unit 152 then estimates the depth of a tip of each finger using equation (1). The measurement unit 152 assigns serial numbers to the fingertips in the order from smallest to greatest in horizontal coordinate value for each of the images taken by the left and right cameras 1 and 2. The measurement unit 152 regards fingertips having the same number as corresponding points and substitutes the values of the corresponding points into the above-described equation thereby obtaining Z. The measurement unit 152 stores the estimated depth of each finger in the storage unit 14. Internal parameters of the cameras used in calculating f may be estimated using, for example, a calibration method described in Zhengyou Zhang, "A flexible new technique for camera calibration", IEEE Transactions on Pattern Analysis and Machine Intelligence, 22(11), pp. 1330-1334, 2000.

Thereafter, the measurement unit 152 performs a pressing-down judgment. In the present embodiment, by way of example, the press-down is performed by detecting a contact between a finger and the work plane. At the beginning of the execution, the depth of the work plane is measured in advance by using the active stereoscopic method as described above. When the difference between the depth of a finger and the depth of the document plane falls within a threshold range, the measurement unit 152 determines that pressing down is performed. In a case where the depth falls within the threshold range for a plurality of fingers, the measurement unit 152 determines that pressing down is performed with the plurality of fingers. In a case where the depth of any of the plurality of fingers is not within the threshold range, a virtual image of a previous frame is displayed at the same position and the process on the current frame is ended.

The display unit 153 controls the projector 3 such that a selection position indicator image indicating a point on which a selection operation is performed by a finger is displayed on an operation target object on which the virtual image is projected according to the 3-dimensional coordinate position of the finger measured by the measurement unit 152.

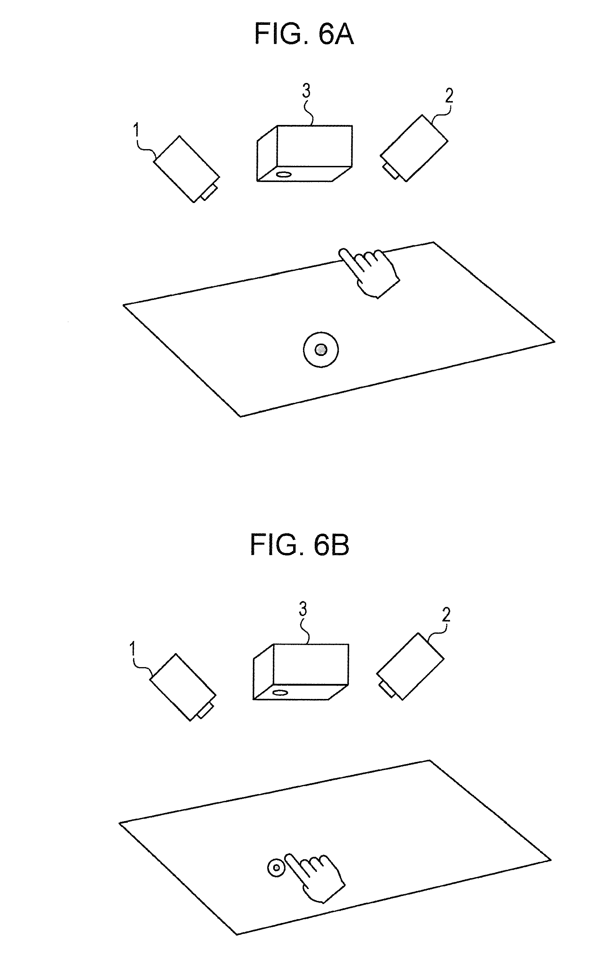

The display unit 153 displays the selection position indicator image indicating the selection position on the work plane even when the finger is located in the air apart from the work plane. In the examples illustrated in FIGs. 6A and 6B, the finger detection position is projected as a center point on the work plane, and the height of the finger from the work plane is indicated by the size of the circle whose center is located at the center point. In the example illustrated in FIG. 6A, the fingertip is located far apart from the work plane and thus the circle is displayed such that the circle has a large diameter. On the other hand, in the example illustrated in FIG. 6B, the fingertip is located close to the work plane, and thus the displayed circle has a small diameter. Thus, a user is allowed to precisely specify an operation position by touching the work plane such that the center point comes to an intended position.

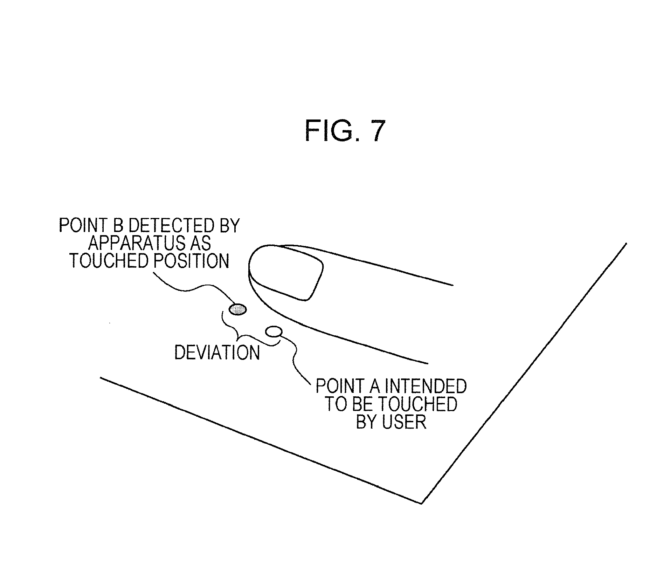

On the other hand, in the conventional technique, as illustrated by way of example in FIG. 7, when a user specifies a point A, an apparatus regards a point B as a specified point, and thus there is a deviation of a few millimeters to one centimeter between the actually specified point A and the recognized point B. When the user recognizes from a copied image or the like that the position intended by the user is not correctly recognized, the user repeats the process of specifying the position many times until the intended position is finally correctly recognized by the apparatus. The operation having such a deviation in position between the intended point and the recognized point results in a great reduction in usability and operation efficiency. In the information operation display system 100, to handle the above situation, the apparatus presents a detection result of the finger of the user in a visible manner so as to reduce the deviation between the intention of the user and the result of the detection performed by the apparatus thereby achieving an improvement in operation efficiency.

Concerning the display position, the display unit 153 determines coordinates in the projector coordinate plane on which the selection position indicator image is projected from the predetermined homography matrix indicating the relationship between the camera recognition coordinate system and the projector display coordinate system according to equations (2) and (3) described below. Let $(x\_src, y\_src)$ denote the center coordinates of the display position in the camera recognition coordinate system, and $(x\_dst, y\_dst)$ denote the center coordinates of the display position in the projector display coordinate system. Note that $h\_11$ to $h\_33$ are components of an inverse matrix $H^{-1}$ of the homography matrix obtained via the calibration process described above. The finger coordinates are displayed using the information illustrated by way of example in FIGs. 4A and 4B such that the outline shape of the selection position indicator image is changed depending on the depth. For example, the size of the circle is changed as illustrated by way of example in FIGs. 6A and 6B.

$$x_{dst} = \frac{h_{11}x_{src} + h_{12}y_{src} + h_{13}}{h_{31}x_{src} + h_{32}y_{src} + h_{33}} \qquad \cdot \cdot \cdot (2)$$

$$y_{dst} = \frac{h_{21}x_{src} + h_{22}y_{src} + h_{23}}{h_{31}x_{src} + h_{32}y_{src} + h_{33}} \qquad \cdot \cdot \cdot (3)$$

A method of determining the size of the circle depending on the depth is described below. When the depth of the work plane is denoted by L and the depth of the fingertip is denoted by Z, the display unit 153 determines the radius r of the circle according to equation described below.

$$[0065] \quad r = \alpha(L - Z) + b$$

where $\alpha$ and b are allowed to take arbitrary values. Note that when the fingertip is in a contact with the work plane, r = b.

Note that the manner of displaying the selection position indicator image depending on the depth of the fingertip is not limited to the above-described manner using the circle. For example, brightness may be changed depending on the depth. More specifically, for example, the brightness is reduced as the fingertip goes away from the work plane while the brightness is increased as the fingertip comes closer to the work plane. Still alternatively, the color of the selection position indicator image may be changed depending on the depth of the fingertip. For example, the color may be changed toward red as the fingertip goes away from the work plane, while the color may be changed toward blue as the fingertip comes closer to the work plane.

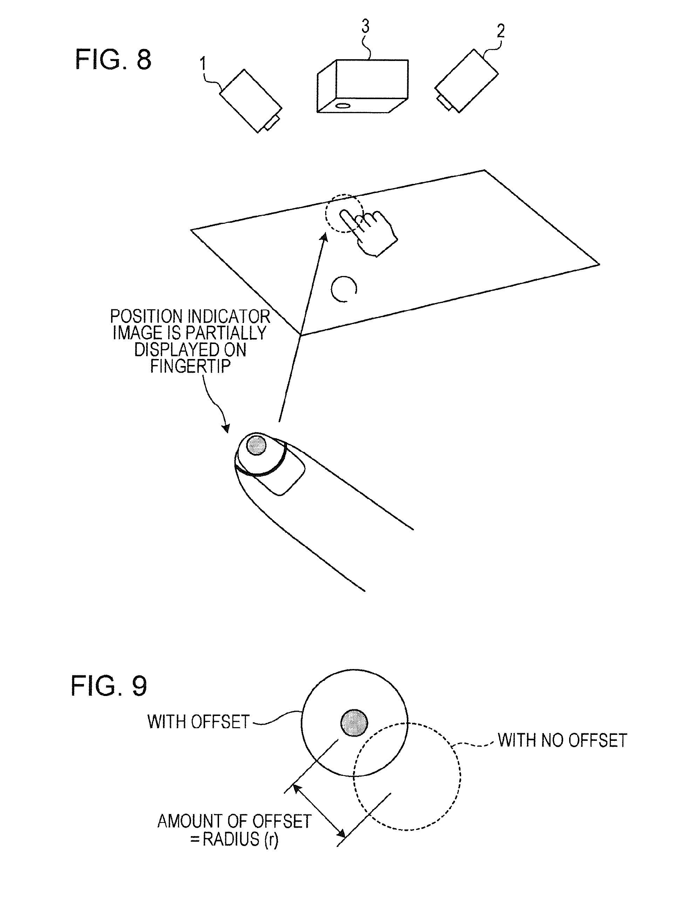

As illustrated by way of example in FIG. 8, there is a possibility that light emitted from the projector 3 is blocked by a fingertip and the selection position is not displayed on the work plane. In particular when the center point is not displayed, it becomes difficult to recognize the selection position. This situation may occur not only in a case where the selection position is set to be slightly inside the fingertip but also in a case where a finger is moved quickly and displaying the selection position does not follow the movement of the finger. The above-described situation may also occur due to a detection error of the fingertip.

To ensure that the selection position is displayed when the fingertip is located in the air apart from the work plane, the display position may be offset such that the display position is not hidden by the fingertip. However, when the fingertip comes close to the work plane, if there is still an offset, a wrong position is selected. To handle this situation, the display unit 153 changes the offset depending on the depth of the fingertip such that the offset is reduced as the fingertip approaches the work plane.

For example, when the offset is given in a Y direction, and when the depth of the work plane is denoted by L and the depth of the fingertip is denoted by Z, the amount of the offset Yos is given by a following equation.

$$[0071] \quad Yos = \alpha(L - Z) + b$$

where $\alpha$ and b are allowed to take arbitrary values. In a case where b = 0, the offset is equal to zero when the fingertip is in contact with the work plane.

FIG. 9 illustrates a manner in which the situation is improved by providing the offset. For example, the amount of the offset may be set to be equal to a radius (r) of the circle indicating the selection position. The size of the circle and the amount of offset are changed depending on the depth of the fingertip. More specifically, the radius of the circle and the amount of offset are increased as the depth increases. This makes it possible to display the whole circle and the center point thereof at any time, which allows a user to easily recognize the selection position.

[Process performed by information processing apparatus]

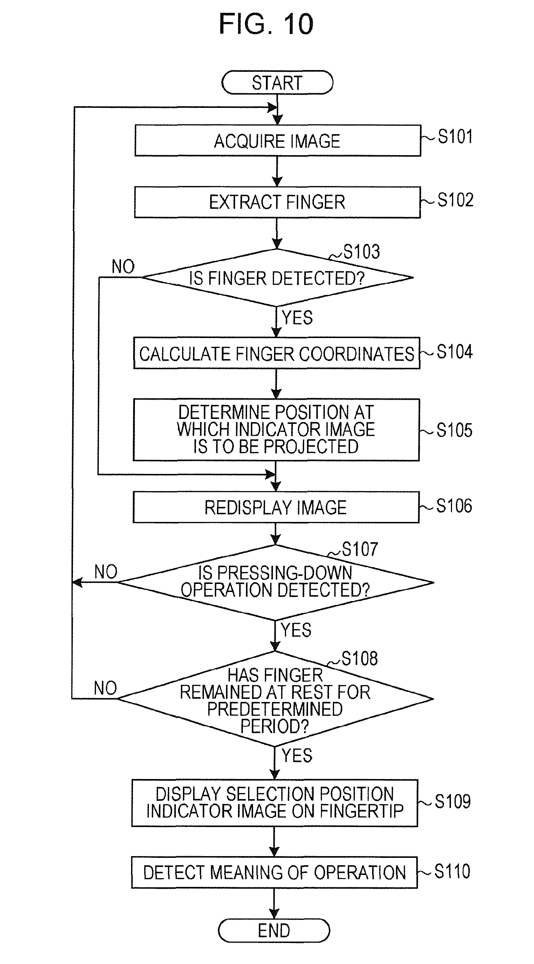

Next, referring to FIG. 10, a process performed by the information processing apparatus 10 according to the first embodiment is described below. FIG. 10 is a flow chart illustrating a procedure of a selection position display process performed by the information processing apparatus 10 according to the first embodiment.

As illustrated in FIG. 10, the acquisition unit 151 of the information processing apparatus 10 acquires images taken by the cameras 1 and 2 (step S101). For example, the acquisition unit 151 acquires images from the two cameras 1 and 2 60 times per second. Thereafter, the acquisition unit 151 detects a finger area in the captured images.

The acquisition unit 151 then extracts only the finger area from the captured images (step S102). For example, the acquisition unit 151 detects a flesh color area and extracts the finger area based on a color information of each pixel in the images and according to a condition associated with the color extraction.

The acquisition unit 151 then determines whether there is output data associated with the finger position detection (step S103). In a case where the determination performed by the acquisition unit 151 indicates that there is no output data associated with the finger (i.e., when the answer to step S103 is negative), the processing flow jumps to step S106. In this case, the display unit 153 performs a display update process as a process for a current frame such that a virtual image of a previous frame is displayed at the same position (step S106).

On the other hand, in case where the determination performed by the acquisition unit 151 is that there is output data associated with the finger (i.e., when the answer to step S103 is affirmative), the measurement unit 152 calculates the 3-dimensional coordinates of the finger (step S104). The display unit 153 then determines a position at which to display the selection position indicator image superimposed on an operation target object so as to indicate thereby the position on which the selection operation with the finger is performed (step S105). Concerning the display position, for example, the display unit 153 determines the coordinates in the projector coordinate plane, on which the selection position indicator image is projected, according to equations (2) and (3) described above on the basis of the predetermined homography matrix indicating the relationship between the camera recognition coordinate system and the projector display coordinate system.

After the display unit 153 determines the position at which the selection position indicator image is to be displayed so as to be superimposed on the operation target object, the display unit 153 performs the display update process to display the selection position indicator image at the determined position (step S106). The measurement unit 152 then performs a pressing-down judgment (step S107). For example, the measurement unit 152 performs the press-down determination by detecting a contact of a finger with the work plane.

In a case where the determination by the measurement unit 152 is that pressing down is not detected (i.e., when the answer to step S107 is negative), the processing flow returns to step S101. On the other hand, in case where the determination by the measurement unit 152 is that pressing down is detected (i.e., when the answer to step S107 is affirmative), then a further determination is performed as to whether the finger has been kept at rest for a predetermined period (step S108). In a case where the determination by the measurement unit 152 is that the finger has not been kept at rest for the predetermined period (i.e., when the answer to step S108 is negative), the processing flow returns to step S101. On the other hand, in a case where the determination by the measurement unit 152 is that the finger has been kept at rest for the predetermined period (i.e., when the answer to step S108 is affirmative), the projector 3 displays the selection position indicator image such that the selection position indicator image moves to the exact position of the fingertip (step S109). When the selection position indicator image is moved, a beep sound or the like may be generated. Thereafter, the measurement unit 152 detects a meaning of the operation from a gesture given by the finger (step S110). Thereafter, the process is ended.

[Advantageous effects of first embodiment]

As described above, the information operation display system 100 includes the cameras 1 and 2, the projector 3, and the information processing apparatus 10. The information processing apparatus 10 acquires images taken by the cameras 1 and 2 and measures the 3-dimensional coordinate position of the finger included in the acquired taken images. According to the measured 3-dimensional coordinate position of the finger, the information processing apparatus 10 controls the projector 3 to display, on the operation target object, the selection position indicator image indicating the point on which the selection operation with the finger is performed. Thus, it becomes possible to reduce an input error against the intention of a user, which allows a reduction in an operation error and allows an improvement in operability.

Furthermore, the information processing apparatus 10 controls the projector 3 to change the contour shape of the selection position indicator image displayed on the operation target object depending on the distance between the finger and the operation object. Thus, a user is allowed to precisely specify an operation position by touching the work plane such that the center point comes to the intended position.

The information processing apparatus 10 controls the projector 3 to change the brightness of the selection position indicator image displayed on the operation target object depending on the distance between the finger and the operation target object. This makes it possible for an operator to easily recognize the selection position indicator image, which allows the operator to precisely specify the operation position.

The information processing apparatus 10 controls the projector 3 to change the color of the selection position indicator image displayed on the operation target object depending on the distance between the finger and the operation target object. This makes it possible for an operator to easily recognize the selection position indicator image, which allows the operator to precisely specify the operation position.

The information processing apparatus 10 displays the selection position indicator image at a position such that the distance from the measured 3-dimensional coordinate position to the position increases as the distance between the finger and the operation target object increases. Conversely, the information processing apparatus 10 controls the projector 3 such that the selection position indicator image is displayed at a position, where the distance from the measured 3-dimensional coordinate position to the selection position indicator image decreases as the distance between the finger and the operation target object decreases. This reduces the possibility that light emitted from the projector 3 is blocked by a fingertip and the selection position indicator image is not displayed on the work plane. Thus, the whole circle and the center point thereof are displayed at any time, which allows a user to easily recognize the selection position.

Second Embodiment

In the first embodiment described above, displaying the selection position indicator image indicating the selection position on the work plane is started when the finger is located in the air apart from the work plane to make it possible for a user to precisely specify the operation position. However, embodiments may be limited to that described above. For example, the information processing apparatus may detect a resting state of a finger and may detect a command to start or end an operation on the operation target object from the resting state. During a period in which detecting of the resting state is in progress, the information processing apparatus may present information to instruct to keep the resting state of the finger.

In a conventional technique, a copy area is specified, for example, as follows. That is, when the difference between the depth of a fingertip and the depth of the work plane becomes smaller than a threshold value, it is determined that the start position of the copy area is specified. On the other hand, when the difference between the depth of the fingertip and the depth of the work plane becomes greater than a threshold value, it is determined that the end position of the copy area is specified. However, in practice, when the depth detection accuracy is not good enough, the threshold value is set to be large. For example, the threshold value may be set to 5 mm. In such a case, in addition to the depth, changes in X and Y coordinates of the fingertip are monitored, and a contact state or a pressing-down operation is detected based on a combination of detecting a resting state of the fingertip and determining the depth with respect to the threshold value.

However, it may be difficult for a user to know whether the resting state of the fingertip has been kept for a sufficiently long period. Thus, there is a possibility that the period during which the resting state of the fingertip kept by the user is not long enough for the apparatus to regard pressing down to occur. Thus, the user may repeat the same operation many times until the apparatus determines that the pressing down is detected. To handle the above situation, the apparatus may display information on the work plane to inform a user of remaining time during which the fingertip is to be further kept at rest until the apparatus determines that pressing down is detected or to inform the user of a result of the determination thereby prompting the user to keep the fingertip at rest for a particular period.

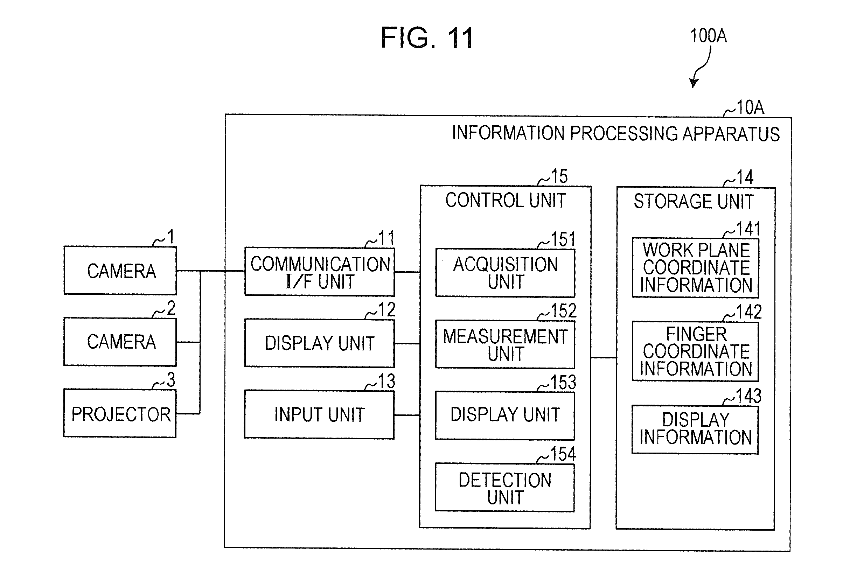

In view of the above, the second embodiment provides an information operation display system 100A. Referring to FIGs. 11 to 14, a configuration of the information operation display system 100A according to the second embodiment and a process performed by the information operation display system 100A are described below for a case where information is presented to instruct to keep the resting state of a finger during a period in which detecting of the resting state is in progress.

First, referring to FIG. 11, a configuration of an information processing apparatus 10A in the information operation display system 100A according to the second embodiment is described below. In the following discussion, a focus is placed on a difference from the information processing apparatus 10 illustrated in FIG. 2. The information processing apparatus 10A is different from the information processing apparatus 10 illustrated in FIG. 2 in that a detection unit 154 is additionally provided. In this information processing apparatus 10A, the detection unit 154 detects a resting state of a finger using a 3-dimensional coordinate position of an operation object measured by the measurement unit 152, and the detection unit 154 detects a command to start or end an operation on an operation target object from the resting state.

The display unit 153 controls the projector 3 to present information to instruct to keep the resting state of the finger during the period in which detecting of the resting state by the detection unit 154 is in progress. Furthermore, to present information to instruct to keep the resting state of the finger, the display unit 153 controls the projector 3 to present information indicating a progress of the detecting of the resting state until the detection is completed.

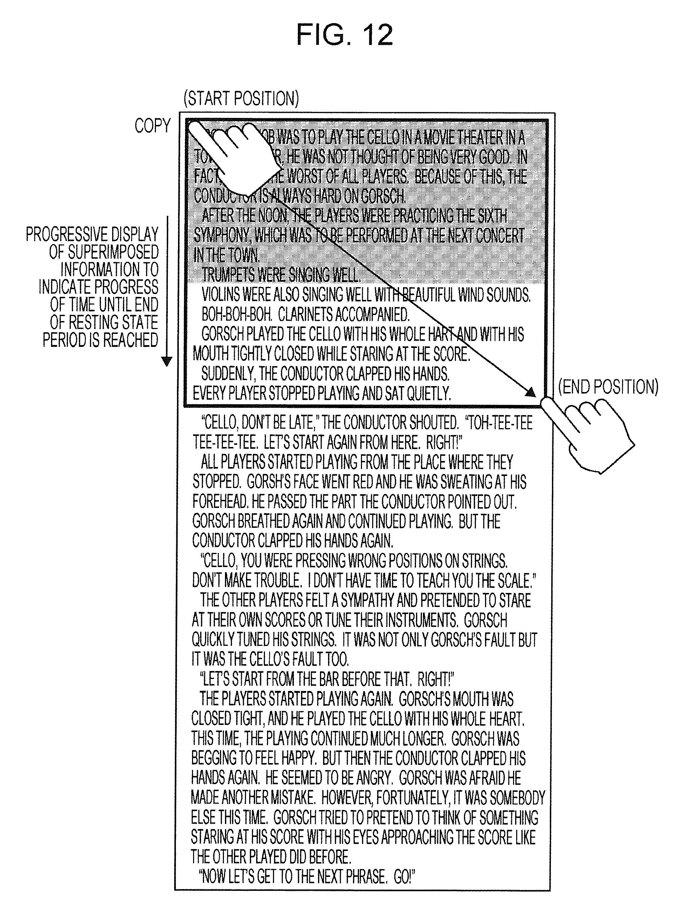

Next, referring to FIG. 12, a display process to present an instruction to keep the resting state of a finger is displayed below. FIG. 12 is a diagram illustrating a display process to present an instruction to keep the resting state of a finger. As illustrated in FIG. 12, a user may perform an operation such that a start position is touched with a fingertip to specify the start point of a copy area and the fingertip is released at an end point located on a diagonal line of a rectangular copy area thereby specifying the end point. After the resting state has been kept for a predetermined period until the detecting of the resting state is completed, the display unit 153 displays an image at the start position to indicate that pressing down is detected. For example, as illustrated in FIG. 12, the display unit 153 may control the projector 3 to display a word "COPY".

When the end position is reached, displaying of a progress is performed as illustrated by way of example in FIG. 12 to prompt a user to keep the fingertip at the end position. More specifically, for example, as illustrated by way of example in FIG. 12, the display unit 153 controls the projector 3 to display a shaded area superimposed on a selected area such that the shaded area is gradually expanded in a few seconds until the selected area is completely shaded.

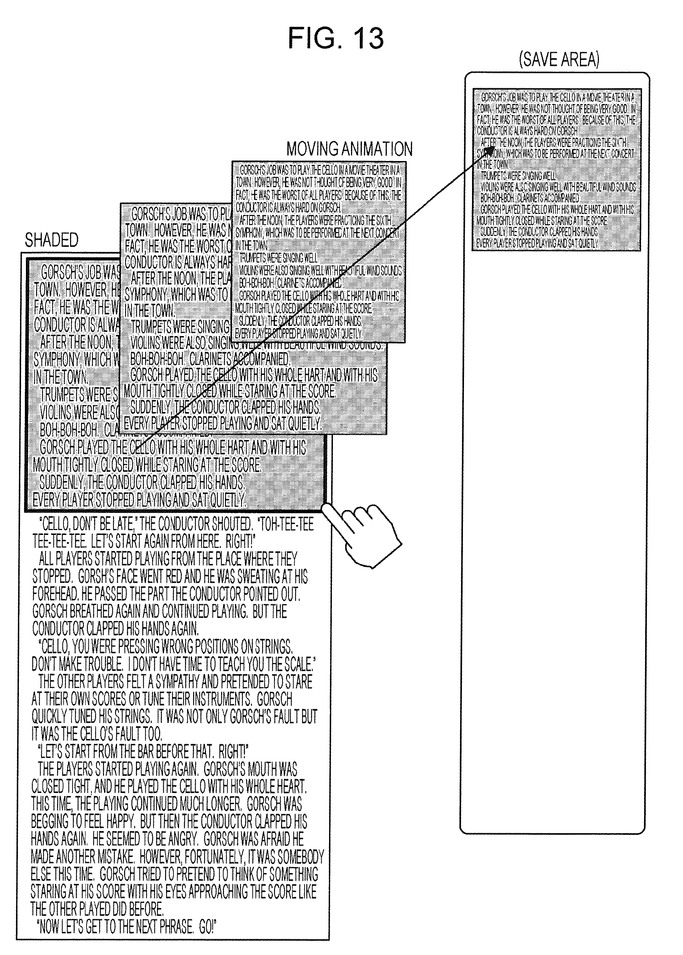

Furthermore, as illustrated by way of example in FIG. 13, when the completion of the gradual shading process is detected, the display unit 153 displays a copied image so as to be superimposed on a source area to indicate that the shading process is completed, and the display unit 153 further controls the projector 3 to display an animation of moving the copied image to a save area. FIG. 13 is a diagram illustrating a manner in which the copied image is displayed in the superimposed fashion to indicate the completion of the copying process and the animation of moving the image is displayed.

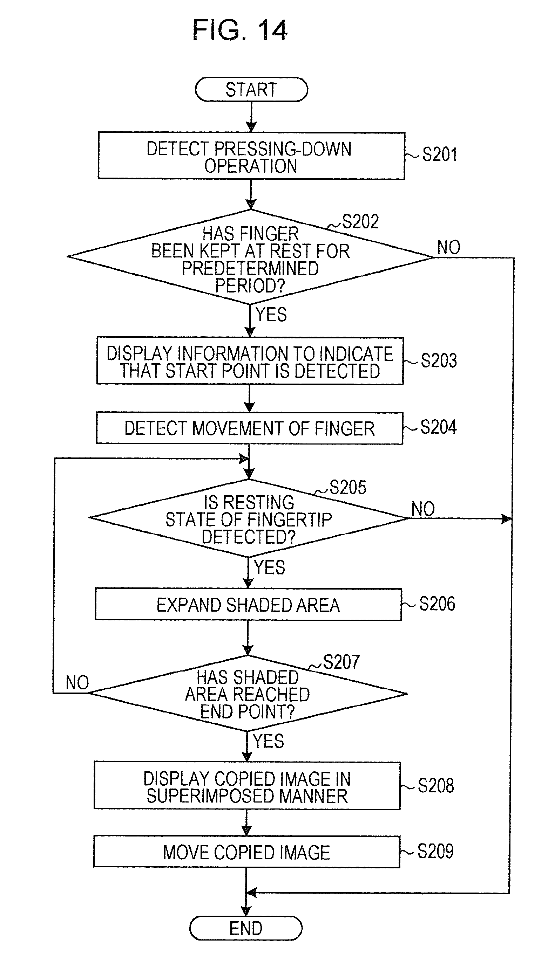

Next, referring to FIG. 14, a description is given below as to the process performed by the information processing apparatus 10A according to the second embodiment to present the instruction to keep the resting state of the finger and to select the copy area. FIG. 14 is a flow chart illustrating a procedure of the process performed by the information processing apparatus 10A according to the second embodiment to present the instruction to keep the resting state of the finger and to select the copy area.

First, when the information processing apparatus 10A detects a pressing-down operation with a finger (step S201), the information processing apparatus 10A determines whether the finger has been kept at rest for a predetermined period (step S202). In a case where the determination by the information processing apparatus 10A is that the resting state has not been kept for the predetermined period (i.e., when the answer to step S202 is negative), the process is ended. On the other hand, in a case where the determination by the information processing apparatus 10A is that the resting state has been kept for the predetermined period (i.e., when the answer to step S202 is affirmative), an image is displayed to indicate that specifying of a start point or pressing down is detected (step S203). For example, as illustrated by way of example in FIG. 12, the information processing apparatus 10A controls the projector 3 to display a word "COPY".

When the information processing apparatus 10A then detects movement of the fingertip (step S204), the information processing apparatus 10A determines whether a resting state of the fingertip is detected (step S205). In a case where the determination by the information processing apparatus 10A is that a resting state of the fingertip is not detected (i.e., when the answer to step S205 is negative), the process is ended. On the other hand, in a case where the determination by the information processing apparatus 10A is that a resting state of the fingertip is detected (i.e., when the answer to step S205 is affirmative), the shading is updated to expand the shaded area (step S206). For example, the information processing apparatus 10A controls the projector 3 to display a shaded area in a superimposed manner such that the shaped area is gradually expanded in a few seconds until the selection area is completely shaded.

Thereafter, the information processing apparatus 10A determines whether the shading reaches the end point (step S207). In a case where the determination by the information processing apparatus 10A is that the shading has not yet reached the end point (i.e., when the answer to step S207 is negative), the processing flow returns to step S205. In a case where the determination by the information processing apparatus 10A is that the shading has reached the end point (i.e., when the answer to step S207 is affirmative), the information processing apparatus 10A controls the projector 3 to display a copied image in a superimposed manner (step S208). The information processing apparatus 10A then displays an animation of moving the copied image (step S209). For example, the information processing apparatus 10A controls the projector 3 to display the copied image so as to be superimposed on the source area and display an animation of moving the copied image to a save area.

As described above, in the second embodiment, the information operation display system 100A includes the cameras 1 and 2 and the information processing apparatus 10A. The information processing apparatus 10A acquires images taken by the cameras 1 and 2, and measures the 3-dimensional coordinate position of the operation object included in the acquired images. The information processing apparatus 10A detects a resting state of the finger using the measured 3-dimensional coordinate position of the operation object, and furthermore the information processing apparatus 10A detects a command to start or end an operation on the operation target object from the resting state. During the period in which detecting of the resting state is in progress, the information processing apparatus 10A controls the projector 3 to present information to instruct to keep the resting state of the finger. This makes it possible to properly prompt a user to keep the resting state of the finger for a particular period.

In the second embodiment, to present information to instruct to keep the resting state of the finger, the display unit 153 controls the projector 3 to present information indicating a progress of the detecting of the resting state until the detection is completed. This makes it possible to properly prompt a user to keep the resting state of the fingertip by presenting information indicating the progress of the process of detecting the resting state until the detection is completed.

[System configuration]

Note that constituent elements of each apparatus illustrated above are conceptual elements that provide particular functions, and they may not be physically configured as illustrated in figures. That is, the manner of distributing or integrating elements or apparatus is not limited to that described above with reference to the figures, but all or part of them may be functionally or physically separated or combined in arbitrary units depending on loads or usage conditions. For example, the acquisition unit 151, the measurement unit 152, and the display unit 153 in FIG. 2 may be properly combined or divided. Furthermore, all or part of processing functions executed by respective processing units may be realized by a CPU and a program interpreted and executed by the CPU or may be realized by wired logic hardware.

[Program]

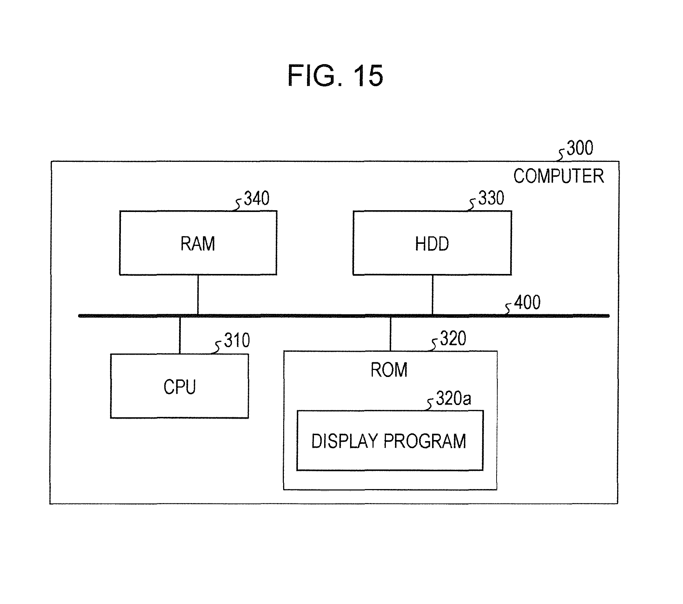

One or more processes according to the embodiments described above may be realized by executing a program prepared in advance by a computer system such as a personal computer, a workstation, or the like. Thus, an example of a computer system is described below which is capable of executing a program to realize all or part of the functions according to the embodiments described above. FIG. 15 is a diagram illustrating a computer configured to execute a display program.

As illustrated in FIG. 15, a computer 300 includes a CPU 310, a read only memory (ROM) 320, a hard disk drive (HDD) 330, and a random access memory (RAM) 340. These units 310 to 340 are connected to each other via a bus 400.

In the ROM 320, a display program 320a is stored in advance to realize functions similar to those realized by the respective processing units according to the embodiments described above. For example, the display program 320a stored in the ROM 320 may realize a function similar to that realized by the control unit 15 according to the embodiments described above. Note that the display program 320a may be properly divided into a plurality of parts.

The HDD 330 stores various kinds of data. More specifically, for example, the HDD 330 stores an operating system (OS) and various kinds of data.

The CPU 310 reads out the display program 320a from the ROM 320 and executes the display program 320a to perform operations similar to those performed by the processing units according to the embodiments described above. More specifically, for example, the display program 320a is executed to perform an operation similar to that performed by the control unit 15 according to the embodiments.

Note that the display program 320a described above may not be stored in the ROM 320 at the beginning. The display program 320a may be stored in the HDD 330.

The program may be stored in a portable physical medium inserted in the computer 300 such as a flexible disk (FD), a compact disk read only memory (CD-ROM), a digital versatile disk (DVD), a magneto-optical disk, an IC card, or the like, and the computer 300 may read out the program from the portable physical medium and execute the program.

Alternatively, the program may be stored in another computer (or a server) connected to the computer 300 via a public communication line, the Internet, a LAN, a WAN, or the like, and the computer 300 may read out the program therefrom and execute the program.

**Claims**

1. An information operation display system including a camera, a projector, and an information processing apparatus, the information processing apparatus comprising:

 an acquisition unit configured to acquire an image taken by the camera;
 a measurement unit configured to measure a 3-dimensional coordinate position of an operation object included in the image acquired by the acquisition unit; and
 a display unit configured to control the projector such that an image indicating a point on which a selection operation is performed by the operation object is displayed on an operation target object according to the 3-dimensional coordinate position of the operation object measured by the measurement unit.

2. The information operation display system according to claim 1, wherein the display unit controls the projector such that a contour shape of the image displayed on the operation target object is changed depending on a distance between the operation object and the operation target object.

3. The information operation display system according to claim 1, wherein the display unit controls the projector such that a luminance of the image displayed on the operation target object is changed depending on a distance between the operation object and the operation target object.

4. The information operation display system according to claim 1, wherein the display unit controls the projector such that a color of the image displayed on the operation target object is changed depending on a distance between the operation object and the operation target object.

5. The information operation display system according to one of claims 1 to 4, wherein the display unit controls the projector such that the image is displayed at a position whose distance from the 3-dimensional coordinate position measured by the measurement unit increases as the distance between the operation object and the operation target object increases and whose distance decreases as the distance between the operation object and the operation target object decreases.

6. The information operation display system according to claim 1, further comprising:

 a detection unit configured to detect a resting state of the operation object using the 3-dimensional coordinate position of the operation object measured by the measurement unit and detect a command to start or end an operation on an operation target object from the resting state,

wherein the display unit configured to control the projector to present information to instruct to keep the resting state of the operation object during a period in which detecting of the resting state by the detection unit is in progress.

7. The information operation display system according to claim 6, wherein to present the information to instruct to keep the resting state of the operation object, the display unit controls the projector to present information indicating a progress of the detecting of the resting state until the detection is completed.

8. A display program configured to cause a computer to execute a process, the process comprising:

acquiring an image taken by a camera;
measuring a 3-dimensional coordinate position of an operation object included in the image; and
controlling a projector such that an image indicating a point on which a selection operation is performed by the operation object is displayed on an operation target object according to the 3-dimensional coordinate position of the operation object.

9. A display method executed by a computer, the display method comprising:

acquiring an image taken by a camera;
measuring a 3-dimensional coordinate position of an operation object included in the image; and
controlling a projector such that an image indicating a point on which a selection operation is performed by the operation object is displayed on an operation target object according to the 3-dimensional coordinate position of the operation object.

FIG. 1

100

INFORMATION
PROCESSING
APPARATUS — 10

3

1

2

Y AXIS

PROJECTION
PLANE

DOCUMENT

X AXIS

# FIG. 2

100

INFORMATION PROCESSING APPARATUS ~10

CAMERA ~1 · CAMERA ~2 · PROJECTOR ~3

COMMUNICATION I/F UNIT ~11

DISPLAY UNIT ~12

INPUT UNIT ~13

CONTROL UNIT ~15
- ACQUISITION UNIT ~151
- MEASUREMENT UNIT ~152
- DISPLAY UNIT ~153

STORAGE UNIT ~14
- WORK PLANE COORDINATE INFORMATION ~141
- FINGER COORDINATE INFORMATION ~142
- DISPLAY INFORMATION ~143

EP 2 787 416 A1

# FIG. 3

| PIXEL COORDINATES [pixel] | DEPTH [m] |
|---|---|
| (0, 0) | 0.32 |
| (0, 1) | 0.34 |
| (0, 2) | 0.37 |
| (0, 3) | 0.34 |
| ... | ... |

# FIG. 4A

| FINGER NO. | FINGER COORDINATES [pixel] |
|---|---|
| 1 | (210, 260) |
| 2 | (230, 230) |
| 3 | (240, 200) |
| 4 | (250, 220) |
| 5 | (265, 255) |

# FIG. 4B

| FINGER NO. | FINGER COORDINATES [pixel] |
|---|---|
| 1 | (190, 260) |
| 2 | (210, 230) |
| 3 | (220, 200) |
| 4 | (230, 220) |
| 5 | (245, 255) |

# FIG. 5

| FINGER NO. | DEPTH [m] |
|---|---|
| 1 | 0.36 |
| 2 | 0.32 |
| 3 | 0.34 |
| 4 | 0.33 |
| 5 | 0.34 |

## FIG. 6A

## FIG. 6B

# FIG. 7

POINT B DETECTED BY
APPARATUS AS
TOUCHED POSITION

DEVIATION

POINT A INTENDED
TO BE TOUCHED
BY USER

FIG. 8

POSITION INDICATOR
IMAGE IS PARTIALLY
DISPLAYED ON
FINGERTIP

FIG. 9

WITH OFFSET

WITH NO OFFSET

AMOUNT OF OFFSET
= RADIUS (r)

EP 2 787 416 A1

# FIG. 10

START

ACQUIRE IMAGE — S101

EXTRACT FINGER — S102

S103
IS FINGER DETECTED? — NO

YES

CALCULATE FINGER COORDINATES — S104

DETERMINE POSITION AT
WHICH INDICATOR IMAGE
IS TO BE PROJECTED — S105

REDISPLAY IMAGE — S106

S107
IS PRESSING-DOWN
OPERATION DETECTED? — NO

YES

S108
HAS FINGER
REMAINED AT REST FOR
PREDETERMINED
PERIOD? — NO

YES

DISPLAY SELECTION POSITION
INDICATOR IMAGE ON FINGERTIP — S109

DETECT MEANING OF OPERATION — S110

END

# FIG. 11

EP 2 787 416 A1

# FIG. 12

(START POSITION)

COPY

PROGRESSIVE DISPLAY
OF SUPERIMPOSED
INFORMATION TO
INDICATE PROGRESS
OF TIME UNTIL END
OF RESTING STATE
PERIOD IS REACHED

OB WAS TO PLAY THE CELLO IN A MOVIE THEATER IN A
TO... R, HE WAS NOT THOUGHT OF BEING VERY GOOD. IN
FACT... E WORST OF ALL PLAYERS. BECAUSE OF THIS, THE
CONDUCTOR IS ALWAYS HARD ON GORSCH.
AFTER THE NOON, THE PLAYERS WERE PRACTICING THE SIXTH
SYMPHONY, WHICH WAS TO BE PERFORMED AT THE NEXT CONCERT
IN THE TOWN.
TRUMPETS WERE SINGING WELL.
VIOLINS WERE ALSO SINGING WELL WITH BEAUTIFUL WIND SOUNDS.
BOH-BOH-BOH. CLARINETS ACCOMPANIED.
GORSCH PLAYED THE CELLO WITH HIS WHOLE HART AND WITH HIS
MOUTH TIGHTLY CLOSED WHILE STARING AT THE SCORE.
SUDDENLY, THE CONDUCTOR CLAPPED HIS HANDS.
EVERY PLAYER STOPPED PLAYING AND SAT QUIETLY.

(END POSITION)

"CELLO, DON'T BE LATE," THE CONDUCTOR SHOUTED. "TOH-TEE-TEE
TEE-TEE-TEE. LET'S START AGAIN FROM HERE. RIGHT!"
ALL PLAYERS STARTED PLAYING FROM THE PLACE WHERE THEY
STOPPED. GORSH'S FACE WENT RED AND HE WAS SWEATING AT HIS
FOREHEAD. HE PASSED THE PART THE CONDUCTOR POINTED OUT.
GORSCH BREATHED AGAIN AND CONTINUED PLAYING. BUT THE
CONDUCTOR CLAPPED HIS HANDS AGAIN.
"CELLO, YOU WERE PRESSING WRONG POSITIONS ON STRINGS.
DON'T MAKE TROUBLE. I DON'T HAVE TIME TO TEACH YOU THE SCALE."
THE OTHER PLAYERS FELT A SYMPATHY AND PRETENDED TO STARE
AT THEIR OWN SCORES OR TUNE THEIR INSTRUMENTS. GORSCH
QUICKLY TUNED HIS STRINGS. IT WAS NOT ONLY GORSCH'S FAULT BUT
IT WAS THE CELLO'S FAULT TOO.
"LET'S START FROM THE BAR BEFORE THAT. RIGHT!"
THE PLAYERS STARTED PLAYING AGAIN. GORSCH'S MOUTH WAS
CLOSED TIGHT, AND HE PLAYED THE CELLO WITH HIS WHOLE HEART.
THIS TIME, THE PLAYING CONTINUED MUCH LONGER. GORSCH WAS
BEGGING TO FEEL HAPPY. BUT THEN THE CONDUCTOR CLAPPED HIS
HANDS AGAIN. HE SEEMED TO BE ANGRY. GORSCH WAS AFRAID HE
MADE ANOTHER MISTAKE. HOWEVER, FORTUNATELY, IT WAS SOMEBODY
ELSE THIS TIME. GORSCH TRIED TO PRETEND TO THINK OF SOMETHING
STARING AT HIS SCORE WITH HIS EYES APPROACHING THE SCORE LIKE
THE OTHER PLAYED DID BEFORE.
"NOW LET'S GET TO THE NEXT PHRASE. GO!"

21

# FIG. 13

# FIG. 14

START

DETECT PRESSING-DOWN OPERATION ~S201

HAS FINGER BEEN KEPT AT REST FOR PREDETERMINED PERIOD? ~S202 — NO

YES

DISPLAY INFORMATION TO INDICATE THAT START POINT IS DETECTED ~S203

DETECT MOVEMENT OF FINGER ~S204

IS RESTING STATE OF FINGERTIP DETECTED? ~S205 — NO

YES

EXPAND SHADED AREA ~S206

HAS SHADED AREA REACHED END POINT? ~S207 — NO

YES

DISPLAY COPIED IMAGE IN SUPERIMPOSED MANNER ~S208

MOVE COPIED IMAGE ~S209

END

# FIG. 15

Europäisches
Patentamt

European
Patent Office

Office européen
des brevets

# EUROPEAN SEARCH REPORT

**Application Number**

EP 14 16 1972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/244468 A1 (NISHIHARA H KEITH [US] ET AL) 2 October 2008 (2008-10-02) * paragraphs [0017] - [0040]; figures 1-4 * | 1-9 | INV. G06F3/01 G06F3/00 G06F3/03 G06F3/0488 |
| A | US 2008/288895 A1 (HOLLEMANS GERARD [NL] ET AL) 20 November 2008 (2008-11-20) * paragraphs [0020] - [0021]; figures 2, 3 * | 2 | |
| A | US 2008/278450 A1 (LASHINA TATIANA [NL]) 13 November 2008 (2008-11-13) * paragraph [0019]; figure 2 * * paragraphs [0022] - [0023]; figure 5 * | 5 | |
| A | US 2011/265002 A1 (HONG YOOJIN [US] ET AL) 27 October 2011 (2011-10-27) * paragraphs [0034] - [0045]; figure 4 * | 6,7 | |

**TECHNICAL FIELDS SEARCHED (IPC)**

G06F

The present search report has been drawn up for all claims

| Place of search | Date of completion of the search | Examiner |
|---|---|---|
| Munich | 8 July 2014 | Legrand, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 16 1972

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2014

| Patent document cited in search report | | Publication date | Patent family member(s) | | Publication date |
|---|---|---|---|---|---|
| US 2008244468 | A1 | 02-10-2008 | DE 102009023875 | A1 | 04-02-2010 |
| | | | GB 2460542 | A | 09-12-2009 |
| | | | US 2008244468 | A1 | 02-10-2008 |
| US 2008288895 | A1 | 20-11-2008 | EP 1769328 | A2 | 04-04-2007 |
| | | | JP 2008505379 | A | 21-02-2008 |
| | | | KR 20070036075 | A | 02-04-2007 |
| | | | US 2008288895 | A1 | 20-11-2008 |
| | | | WO 2006003586 | A2 | 12-01-2006 |
| US 2008278450 | A1 | 13-11-2008 | EP 1769326 | A2 | 04-04-2007 |
| | | | JP 2008505381 | A | 21-02-2008 |
| | | | KR 20070036074 | A | 02-04-2007 |
| | | | US 2008278450 | A1 | 13-11-2008 |
| | | | WO 2006003590 | A2 | 12-01-2006 |
| US 2011265002 | A1 | 27-10-2011 | CA 2792987 | A1 | 27-10-2011 |
| | | | CN 102859484 | A | 02-01-2013 |
| | | | DE 112011101422 | T5 | 07-02-2013 |
| | | | EP 2561428 | A1 | 27-02-2013 |
| | | | GB 2492917 | A | 16-01-2013 |
| | | | US 2011265002 | A1 | 27-10-2011 |
| | | | US 2013339899 | A1 | 19-12-2013 |
| | | | WO 2011130849 | A1 | 27-10-2011 |

EPO FORM P0459

For more details about this annex : see Official Journal of the European Patent Office, No. 12/82

**EP 2 787 416 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60152903 A
- JP 2003346162 A

**Non-patent literature cited in the description**

- **P. MISTRY ; P. MAES.** Sixth Sense-A Wearable Gestural Interface. *the Proceedings of SIGGRAPH Asia 2009, Emerging Technologies,* 2009
- **KIMME et al.** Finding circles by an array of accumulators. *Communications of the Association for Computing Machinery,* 1975, vol. 18, 120-122
- **ZHENGYOU ZHANG.** A flexible new technique for camera calibration. *IEEE Transactions on Pattern Analysis and Machine Intelligence,* 2000, vol. 22 (11), 1330-1334